# FASCICULE DE BREVET EUROPEEN

(11) **EP 3 173 326 B1**
(45) Date de publication et mention de la délivrance du brevet: **27.03.2019**
(21) Numéro de dépôt: 16200653.0
(22) Date de dépôt: 25.11.2016
(51) Int. Cl.: B64C 11/06

(54) **ROULEMENT DE PIED DE PALE ET SON PROCEDE DE FABRICATION, SYSTEME, SYSTEME OSCILLANT ET SYSTEME TOURNANT COMPRENANT UN TEL ROULEMENT**
LAGER EINES SCHAUFELFUSSES, UND SEIN HERSTELLUNGSVERFAHREN, SYSTEM, SCHWINGUNGS- UND DREHSYSTEM, DAS EIN SOLCHES LAGER UMFASST
BLADE-ROOT BEARING AND MANUFACTURING METHOD, SYSTEM, OSCILLATING SYSTEM AND ROTARY SYSTEM INCLUDING SUCH A BEARING

(30) Priorité: 27.11.2015 FR 1561471
(43) Date de publication de la demande: 31.05.2017
(73) Titulaire: NTN-SNR Roulements, 74010 Annecy (FR)
(72) Inventeur: AZAM, Guy, 73100 PUGNY-CHATENOD (FR); LEFORT, Guillaume, 74000 ANNECY (FR)
(74) Mandataire: Derambure Conseil

(56) Documents cités:
- GB-A- 2 192 943
- GB-A- 2 271 392
- US-A- 3 463 237

## Description

L'invention concerne le domaine des roulements de pieds de pâle et de leurs procédés de fabrication. Elle concerne également les systèmes, les systèmes oscillants et les systèmes tournants comprenant de tels roulements.

Plus précisément, l'invention concerne le domaine des pales à angle d'incidence variable dans un boîtier tournant d'une hélice d'aéronef, ou autre application.

FR 2 862 609 décrit un exemple d'un tel produit dans lequel la pale est assemblée à un boîtier (appelé « moyeu » dans ce document) par une de ses extrémités, appelée pied de pale. Le pied est monté pivotant selon un axe sensiblement perpendiculaire et sécant avec l'axe du rotor dans une chambre du boîtier. Ce pivotement, entraîné au moyen d'un dispositif (non représenté) couplé à une extension d'un bouchon obturant le pied, permet un réglage de l'angle d'incidence de la pale.

La chambre comporte une paroi latérale, étagée, de révolution autour d'un axe radial de l'hélice qui, après montage de la pale, se confond sensiblement avec l'axe de la pale. La chambre débouche du côté du centre de l'hélice par un côté intérieur et du côté de la pale par un côté extérieur (dans ce document, et dans ce contexte, les termes « côté intérieur et côté extérieur » font référence à l'emplacement selon l'axe radial de l'hélice).

Des première et deuxième rangées de corps roulants, à contact oblique, sont montées entre une jupe ceinturant le pied 3, et une cuvette et une bague extérieure respectives montées sur la paroi latérale, selon un montage classique dit en O.

Les corps roulants, disposés à proximité des côtés extérieur et intérieur, respectivement, sont des rouleaux coniques et des billes à contact oblique, respectivement. Chaque rouleau comporte une grande base orientée vers le côté extérieur.

La cuvette et la bague extérieure, s'appuient sur la paroi par l'intermédiaire de pièces de protection en matière plastique. La bague extérieure du côté intérieur s'appuie sur un premier épaulement de boîtier, la bloquant axialement vers le côté extérieur (dans ce document, dans ce contexte, les termes « intérieur » et « extérieur » sont utilisés comme classiquement lors de la description d'un roulement, pour désigner l'emplacement radial par rapport à un axe du roulement).

Des chemins de roulement intérieurs des rouleaux et des billes, respectivement, sont ménagés dans la jupe de protection.

Lorsque l'hélice tourne, la pale subit deux actions:
- une force centrifuge ou axiale pour la pale et le roulement, fonction de sa vitesse de rotation et de sa masse,
- un moment de flexion en pied de pale dû à une force radiale sur la pale résultant de l'interaction de la pale et de l'air qu'elle brasse.

Pour reprendre efficacement ces actions, il est prévu de précharger les roulements, c'est-à-dire de créer et de maintenir une compression de leurs corps roulants entre leurs chemins de roulement.

Bien que cette réalisation donne toute satisfaction, on cherche toujours à améliorer les performances de ces produits, en maximisant les efforts supportables tout en minimisant l'encombrement.

Ces efforts de recherche ont conduits à redessiner entièrement l'architecture du produit roulement de pied de pale.

Notamment, ces efforts de recherche ont conduit à s'intéresser à une lubrification améliorée du roulement.

Améliorer la lubrification d'un tel roulement est un défi car, en fonctionnement, le lubrifiant est soumis à la force centrifuge. Il en résulte des risques de fuite de lubrifiant, pouvant être dommageables pour un roulement destiné à fonctionner avec une quantité donnée de lubrifiant et/ou pour le moteur du fait d'un balourd excessif gênant son fonctionnement.

GB 2 192 943 décrit un roulement de pied de pâle dans lequel un écrou manchon porte un joint inséré dans une rainure. L'écrou manchon est vissé jusqu'à ce que le joint appuie, pour retenir la graisse, sur une face axiale d'un écrou dont une face radiale présente des pistes de roulement pour des corps roulants.

Ci-après, un exposé de l'invention.

Selon un premier aspect, l'invention a pour objet un roulement d'un pied d'une pâle s'étendant selon une direction longitudinale entre une extrémité proximale et une extrémité distale, le roulement autorisant une oscillation du pied autour d'un axe s'étendant selon la direction longitudinale par rapport à un boîtier,
Le roulement comprenant :
- Au moins une bague extérieure présentant une surface intérieure et une surface extérieure opposée à la surface intérieure, la surface intérieure de la bague extérieure présentant au moins un chemin de roulement extérieur,
- Au moins une bague intérieure présentant une surface intérieure et une surface extérieure opposée à la surface intérieure, la surface extérieure de la première bague intérieure présentant au moins un chemin de roulement intérieur,
   Un espace intérieur étant défini entre la surface intérieure de ladite au moins une bague extérieure et la surface extérieure de ladite au moins une bague intérieure, l'espace intérieur s'étendant entre une extrémité proximale où il est fermé par un système d'étanchéité proximal entre au moins une bague extérieure et au moins une bague intérieure et une extrémité distale où il est fermé par un système d'étanchéité distal entre au moins une bague extérieure et au moins une bague intérieure,
- Au moins une rangée de corps roulants montés dans l'espace intérieur, roulants sur les chemins de roulement extérieur et intérieur,

Un système de rétention du système d'étanchéité distal, comprenant un corps de rétention, et un système de filetage/taraudage réalisé d'une part sur une surface périphérique d'assemblage du corps de rétention et d'autre part sur une surface périphérique de l'une des bagues intérieure et extérieure en regard de la surface périphérique d'assemblage du corps de rétention, le corps de rétention étant vissable jusque dans une position de rétention dans laquelle une surface de butée axiale du corps de rétention forme une butée axiale pour le système d'étanchéité distal dans la direction longitudinale dans le sens proximal->distal.

Grâce à ces dispositions, le système d'étanchéité distal est retenu contre l'action de la force centrifuge, ce qui permet d'améliorer l'étanchéité du roulement.

Selon une réalisation, le système s'opposant au dévissage comprend une fente radiale s'étendant depuis la surface périphérique d'assemblage du corps de rétention séparant une portion proximale d'une portion distale du corps de rétention, et un système de sollicitation sollicitant la portion proximale et la portion distale à l'opposé l'une de l'autre en tendant à ouvrir ladite fente.

Selon une réalisation, le système de sollicitation comprend un alésage axial ménagé dans la portion distale du corps de rétention, et débouchant dans la fente radiale, et une vis, avec une partie servant d'appui, vissable axialement dans l'alésage jusqu'à prendre appui sur la portion proximale du corps de rétention.

Selon une réalisation, le système s'opposant au dévissage comprend une pluralité de fentes réparties circonférentiellement autour de l'axe et une pluralité de systèmes de sollicitation, associés chacun à une fente.

Selon une réalisation, le corps de rétention comprend en outre un relief de montage/démontage.

Selon une réalisation, le relief de montage/démontage comprend au moins une encoche ménagée sur une surface de montage du corps de rétention, et présentant une forme complémentaire d'un outil de montage/démontage du corps de rétention.

Selon un autre aspect, l'invention se rapporte à un système comprenant un roulement d'un pied d'une pâle, et un outil de montage/démontage complémentaire du relief de montage/démontage, solidarisable et désolidarisable du corps de rétention, adapté pour visser le corps de rétention jusque dans la position de rétention.

Selon un autre aspect, l'invention se rapporte à un système oscillant comprenant un roulement, un boîtier assemblé à l'épaulement d'assemblage à un boîtier de la surface extérieure de la bague extérieure unique, une pâle comprenant un pied de pâle assemblé à l'épaulement d'assemblage à un pied de pâle de la surface intérieure de la première bague intérieure, la pâle étant montée oscillante autour dudit axe s'étendant selon la direction longitudinale par rapport au boîtier par l'intermédiaire du roulement.

Selon un autre aspect, l'invention se rapporte à un système tournant autour d'un axe de rotation, le système comprenant au moins un système oscillant s'étendant radialement par rapport à l'axe de rotation, le roulement étant distant de l'axe de rotation.

Selon un autre aspect, l'invention se rapporte à un procédé de fabrication d'un roulement d'un pied d'une pâle dans lequel :
- - on fournit au moins une bague extérieure présentant une surface intérieure et une surface extérieure opposée à la surface intérieure, la surface intérieure de la bague extérieure présentant au moins un chemin de roulement extérieur, au moins une bague intérieure présentant une surface intérieure et une surface extérieure opposée à la surface intérieure, la surface extérieure de la bague intérieure présentant au moins un chemin de roulement intérieur, un espace intérieur étant défini entre la surface intérieure de ladite au moins une bague extérieure et la surface extérieure de ladite au moins une bague intérieure, l'espace intérieur s'étendant entre une extrémité proximale où il est fermé par un système d'étanchéité proximal entre au moins une bague extérieure et au moins une bague intérieure et une extrémité distale où il est fermé par un système d'étanchéité distal entre au moins une bague extérieure et au moins une bague intérieure, et au moins une rangée de corps roulants montés dans l'espace intérieur, roulants sur les premiers chemins de roulement extérieur et intérieur, avec une partie d'un système de filetage/taraudage sur une surface périphérique de l'une des bagues intérieure et extérieure,
- On fournit un corps de rétention comprenant une partie d'un système de filetage/taraudage sur une surface périphérique d'assemblage du corps de rétention,
- On place les parties du système de filetage/taraudage en regard l'une de l'autre,
- On visse le corps de rétention jusque dans une position de rétention dans laquelle une surface de butée axiale du corps de rétention forme une butée axiale pour le système d'étanchéité distal dans la direction longitudinale dans le sens proximal->distal.

Selon une réalisation, ultérieurement, on applique un système s'opposant au dévissage du corps de rétention.

On décrit maintenant brièvement les figures des dessins.
La figure 1 est un schéma de principe en perspective d'un rotor.
La figure 2 est une vue en coupe d'un exemple de réalisation d'un roulement de pied de pâle.
La figure 3a est une vue de côté du système de rétention selon un exemple de réalisation.
La figure 3b est une vue de face du système de rétention de la figure 3a.
Les figures 3c et 3d sont des vues de détail, respectivement, des figures 3a et 3b.
La figure 4 est une vue en coupe en détail du système s'opposant au dévissage.

Ci-après un exposé détaillé de plusieurs modes de réalisation de l'invention assorti d'exemples et de référence aux dessins.

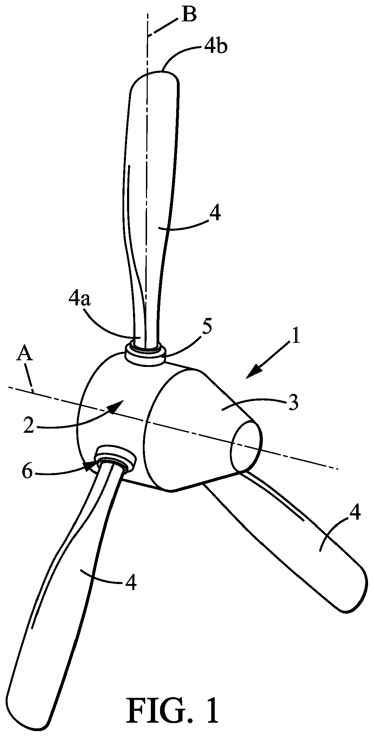

La figure 1 représente schématiquement en trois dimensions en perspective un exemple d'un système tournant 1 selon un exemple de mise en oeuvre de l'invention. Le système tournant 1 comprend un moyeu (non représenté) d'axe A autour duquel est monté rotatif un rotor 2. Le rotor 2 tourne par rapport au moyeu autour de l'axe A. Le rotor 2 comprend un corps principal 3, par exemple symétrique de révolution autour de l'axe A. Le rotor 2 comprend également une ou plusieurs pales 4 (dans l'exemple, trois pales 4), s'étendant chacune radialement par rapport au moyeu. Chaque pale 4 s'étend selon un axe longitudinal B. Une pale pouvant avoir une forme très complexe, il est difficile de définir très précisément l'axe longitudinal B, si ce n'est qu'il correspond à la direction principale de la pale 4. Aussi, quand on dit que la pale 4 s'étend « radialement », on n'implique pas nécessairement que l'axe B intersecte l'axe A ou s'étende dans un plan perpendiculaire à l'axe A, mais la direction générale de la pale 4 est radiale.

La pale 4 s'étend entre une extrémité, appelée pied de pâle 4a, où elle est assemblée au corps principal 3, et une extrémité opposée 4b libre. La pale 4 est montée, au niveau de son pied 4a, dans un boîtier 5 solidaire du corps principal 3. La pale 4 est montée oscillante dans le boîtier 5 par l'intermédiaire d'un roulement (décrit en détail plus loin) monté entre le pied de pale 4a et le boîtier 5. Le roulement en question présente un axe de roulement, et l'oscillation de la pale 4 par rapport au boitier 5 est autorisée par rapport à cet axe. L'axe en question est clairement défini et s'étend sensiblement selon l'axe B. Pour fixer les idées, on peut considérer que l'axe B correspond à l'axe du roulement et, par la suite, on appellera B l'axe du roulement.

En fonctionnement, la pale 4 va tourner par rapport au boîtier 5 autour de l'axe B, mais a priori sur une course angulaire inférieure à 360°. Par contre, la pale 4 va osciller par rapport au boîtier 5 autour de l'axe B par des mouvements de va-et-vient contrôlés, selon les efforts transmis par la pâle au fluide (air) environnant.

Le boîtier 5 est tout composant permettant cette mise en oeuvre.

Comme expliqué ci-dessus, le roulement est par conséquent excentré par rapport à l'axe A, et est par conséquent soumis à une forte centrifugation autour de cet axe A lors de la mise en oeuvre du système tournant 1.

La présente invention est décrite dans un contexte particulier, mais semble applicable à d'autres contextes d'un roulement oscillant autour d'un axe radial et centrifugé autour d'un axe axial.

L'ensemble du boîtier 5, du roulement, et du pied de pale 4a est ainsi appelé un système oscillant 6.

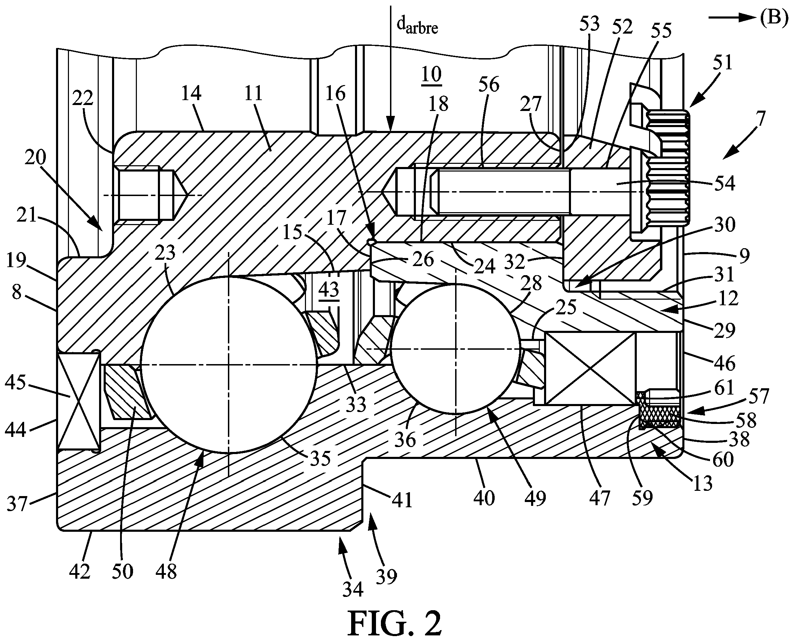

La figure 2 représente un mode de réalisation d'un roulement selon l'invention.

Dans ce qui suit, le terme « axial » fait référence à l'axe B de ce roulement 7, parallèle à la direction (B) représentée. Le terme « proximal » fait référence à la proximité d'un composant à l'axe A, alors que le terme « distal » fait référence à l'éloignement d'un composant de l'axe A.

Le roulement 7 comprend donc un côté proximal 8 et un côté distal 9, opposé au côté proximal 8.

Le roulement 7 définit un alésage intérieur 10 dans lequel le pied de pale 4 est destiné à être monté.

Dans ce qui suit, le terme « intérieur » est utilisé pour désigner la proximité à l'axe B, alors que le terme « extérieur » est utilisé pour désigner l'éloignement de l'axe B.

Le roulement 7 comprend une première bague intérieure 11, une deuxième bague intérieure 12, et une bague extérieure 13 unique. Les bagues intérieures 11 et 12 sont appelées ainsi car elles comportent chacune un chemin de roulement intérieur pour des corps roulants, et la bague extérieure 13 est appelée ainsi car elle comporte des chemins de roulement extérieurs pour des corps roulants, comme ce sera expliqué plus en détail par la suite.

La première bague intérieure 11 comprend une surface intérieure 14 et une surface extérieure 15 opposée à la surface intérieure 14. La surface intérieure 14 peut présenter toute géométrie appropriée. Par exemple, la surface intérieure 14 peut être composée de deux surfaces cylindriques de révolution chacune au droit d'une rangée de corps roulants, avec interposition d'une gorge au centre. La surface intérieure 14 est utilisée pour le montage du roulement 7 sur le pied de pale. La surface intérieure 14 présente un diamètre minimal d_{arbre}. La première bague intérieure 11 s'étend axialement depuis le côté proximal 8 en direction du côté distal 9, sur une grande majorité de la longueur axiale du roulement 7.

Dans la moitié distale du roulement 7, la surface extérieure 15 de la bague intérieure 12 définit un siège distal 16 pour la réception de la deuxième bague intérieure 12. Le siège distal 16 comprend une surface de butée axiale 17 faisant face au côté distal 9, et une surface cylindrique de réception 18 orientée vers l'extérieur, et s'étendant depuis la surface de butée axiale 17.

Dans la moitié proximale du roulement 7, la surface extérieure 15 définit un premier chemin de roulement 23 proximal.

La première bague intérieure 11 comporte une surface d'extrémité proximale 19. La surface intérieure 14 de la première bague intérieure 11 comprend un épaulement 20 d'assemblage à un pied de pâle. L'épaulement 20 comprend une surface cylindrique 21 s'étendant depuis la surface d'extrémité proximale 19 en direction de l'extrémité distale, une surface de butée axiale 22 faisant face au côté proximal 8, et s'étendant depuis la surface cylindrique 21 jusqu'à l'alésage 10.

La première bague intérieure 11 comporte une surface d'extrémité distale 27, opposée à la surface de butée axiale 22 et faisant face au côté distal 9.

La deuxième bague intérieure 12 comprend une surface intérieure 24 et une surface extérieure 25 opposée à la surface intérieure 24. La surface intérieure 24 est utilisée pour le montage de la deuxième bague intérieure 12 dans le siège 16 de la première bague intérieure par emmanchement. La surface intérieure 24 fait donc face, en étant complémentaire, à la surface cylindrique de réception 18. La deuxième bague intérieure 12 s'étend axialement depuis une première surface de butée axiale 26 faisant face au côté proximal 8 en direction du côté distal 9, sur environ une moitié distale de la longueur axiale du roulement 7.

La surface extérieure 25 définit un deuxième chemin de roulement 28 distal.

La deuxième bague intérieure 12 comporte une surface d'extrémité distale 29. La surface intérieure 24 de la deuxième bague intérieure 11 comprend un épaulement 30 de pré-chargement. L'épaulement 30 comprend une surface cylindrique 31 s'étendant depuis la surface d'extrémité distale 29 en direction de l'extrémité proximale, une surface de butée axiale 32 faisant face au côté distal 9, et s'étendant depuis la surface cylindrique 31 jusqu'à la surface cylindrique de réception 18.

La bague extérieure 13 comprend une surface intérieure 33 et une surface extérieure 34 opposée à la surface intérieure 33. La surface extérieure 34 est utilisée pour le montage du roulement 7 sur le boîtier. La bague extérieure 13 s'étend axialement depuis le côté proximal 8 jusqu'au côté distal 9, sur la totalité de la longueur axiale du roulement 7.

Dans la moitié proximale du roulement 7, la surface intérieure 33 définit un deuxième chemin de roulement 35 proximal. Dans la moitié distale du roulement 7, la surface intérieure 33 définit un deuxième chemin de roulement 36 distal.

La bague extérieure 11 comporte une surface d'extrémité proximale 37 et une surface d'extrémité distale 38 opposée. La surface extérieure 34 comprend un épaulement 39 d'assemblage au boîtier. L'épaulement 39 comprend une surface cylindrique 40 s'étendant depuis la surface d'extrémité distale 38 en direction de l'extrémité proximale, une surface de butée axiale 41 faisant face au côté distal 9, et s'étendant depuis la surface cylindrique 40 jusqu'à une deuxième surface cylindrique 42. La deuxième surface cylindrique 42 s'étend depuis la surface de butée axiale 41 jusqu'à la surface d'extrémité proximale 37.

Un espace intérieur unique 43 est défini entre la surface intérieure 33 de la bague extérieure 13 et la surface extérieure 15, 25 des première et deuxième bagues intérieures 11, 12, l'espace intérieur unique 43 s'étendant entre une extrémité proximale 44 où il est fermé par un système d'étanchéité proximal 45 entre la bague extérieure 13 et la première bague intérieure 11 et une extrémité distale 46 où il est fermé par un système d'étanchéité distal 47 entre la bague extérieure 13 et la deuxième bague intérieure 12.

Au niveau de l'espace intérieur unique 43, les premiers chemins de roulement extérieur et intérieur proximaux 23, 35 se font face, et les deuxièmes chemins de roulement extérieur et intérieur distaux 28, 36 se font face.

Une première rangée proximale de corps roulants 48 est montée dans l'espace intérieur unique, roulants sur les premiers chemins de roulement extérieur et intérieur proximaux 23, 35. Une deuxième rangée distale de corps roulants49 est montée dans l'espace intérieur unique, roulants sur les deuxièmes chemins de roulement extérieur et intérieur distaux 28, 36. Les première et deuxième rangées de corps roulants 48, 49 sont espacées l'une de l'autre selon l'axe longitudinal B.

Les corps roulants d'une même rangée sont le cas échéant espacés les uns des autres par une cage 50, comme représentée sur la figure 2 pour la rangée proximale.

Le roulement 7, comprend un système de chargement 51 adapté pour maintenir la deuxième bague intérieure 12 axialement en butée contre la première bague intérieure 11.

Le système de chargement 51 comprend une plaque annulaire 52 présentant une surface d'appui 53 en contact avec la deuxième bague intérieure 12 et sollicitant la deuxième bague intérieure 12 dans le sens axial, la plaque annulaire 52 étant maintenue solidaire de la première bague intérieure 11 par vissage à l'aide de vis 54. Plus précisément, la plaque 52 est vissée sur la bague intérieure 51 par des vis traversant des alésages 55 de la plaque 52 et des alésages 56 de la première bague intérieure 11 mis en correspondance avec les alésages 55. La surface d'appui 53 appuie sur la surface de butée axiale 32, sollicitant ainsi la deuxième bague intérieure 12 en direction du côté proximal, ces efforts de serrage se retrouvant au niveau du contact entre la surface de butée axiale 17 de la première bague intérieure 11 et la surface de butée axiale 26 de la deuxième bague intérieure 12. Les vis sont serrées jusqu'à appliquer une force de chargement F_{précharge}.

Le roulement 7 comprend un système de rétention 57 du système d'étanchéité distal 47. Le système de rétention 57 est principalement disposé pour empêcher ou limiter un déplacement axial selon l'axe (B) du système d'étanchéité distal 47 sous l'effet de la force centrifuge lors de la rotation du rotor 2 autour de l'axe (A).

Le système de rétention 57 comprend un corps de rétention 58. Le corps de rétention 58 est assemblé à l'une des bagues 12, 13 du roulement 7 par un système d'assemblage. Dans le cas présent, le corps de rétention 58 est assemblé à la bague extérieure 13 du roulement 7 par le système d'assemblage. En effet, en plus du mouvement centrifuge lié à la rotation du rotor, le lubrifiant tend à être projeté contre la bague extérieure 13 lors du fonctionnement du rotor (effet centrifuge par rapport à l'axe (B)). Toutefois, en variante, le corps de rétention pourrait être assemblé à la bague intérieure avec laquelle la bague extérieure 13 définit l'espace intérieur 43 au niveau de l'extrémité distale c'est-à-dire, dans le présent exemple, la deuxième bague intérieure 12. Pour fixer les idées, l'invention est décrite ci-dessous selon l'exemple de l'assemblage du corps de rétention 58 à la bague extérieure 13.

L'assemblage du corps de rétention 58 à la bague extérieure 13 est réalisé par exemple par un système de filetage/taraudage. Le corps de rétention 58 présente par exemple une surface extérieure 63 d'enveloppe cylindrique de révolution autour de l'axe (B). On réalise par exemple un filetage sur la surface périphérique extérieure du corps de rétention 58. La surface intérieure 33 de la bague extérieure 13, en regard de la surface périphérique extérieure du corps de rétention 58 présente une géométrie complémentaire de celle-ci, présentant notamment une enveloppe cylindrique de révolution autour de l'axe (B), ainsi qu'un taraudage complémentaire du filetage réalisé sur la surface périphérique extérieure du corps de rétention 58.

Le corps de rétention 58 peut ainsi être vissé dans la bague extérieure 13 par un mouvement de vissage autour de l'axe (B), jusque dans la position de rétention représentée sur la figure 2.

Le cas échéant, la bague extérieure 13 comprend une surface de butée axiale 59 définissant la position de rétention. Une surface de butée axiale 60 du corps de rétention 58 bute sur la surface de butée axiale 59 de la bague extérieure 13 dans la position de rétention, et empêche la poursuite du mouvement de vissage selon l'axe (B).

Le corps de rétention 58 comprend en outre une surface de butée axiale 61 pour le système d'étanchéité distal 47. Cette surface de butée axiale 61 est par exemple disposée radialement intérieure par rapport à la surface de butée axiale 60. La surface de butée axiale 61 est en regard du système d'étanchéité distal 47. En cas de déplacement du système d'étanchéité distal 47 selon l'axe (B), celui-ci vient en appui sur la surface de butée axiale 61 afin de limiter ce déplacement dans le sens proximal -> distal.

Afin de s'opposer à un dévissage non voulu du corps de rétention, par exemple dû à des vibrations, le système de rétention 57 peut comprendre en outre un système 62 s'opposant au dévissage du corps de rétention 58.

Ce système est décrit ici, dans un exemple de réalisation, toujours dans le cas particulier du vissage du corps de rétention 58 dans la bague extérieure. Toutefois, d'autres modes de réalisation sont envisageables à partir de cette description, notamment dans le cas du vissage du corps de rétention 58 dans la bague intérieure.

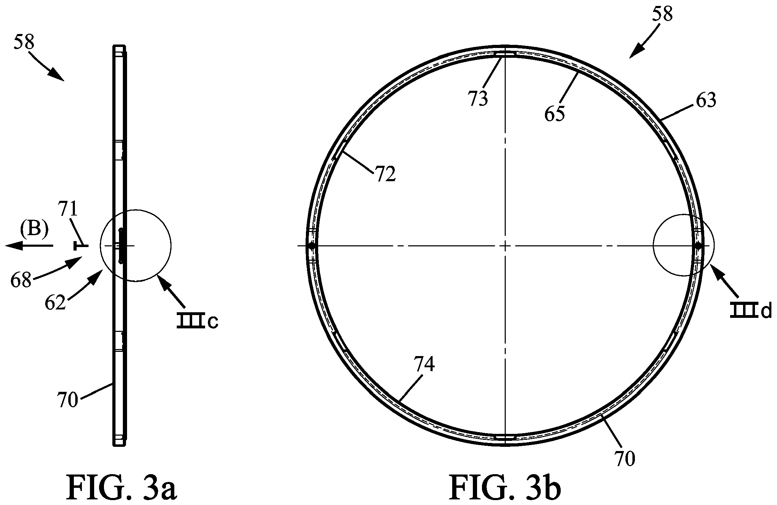

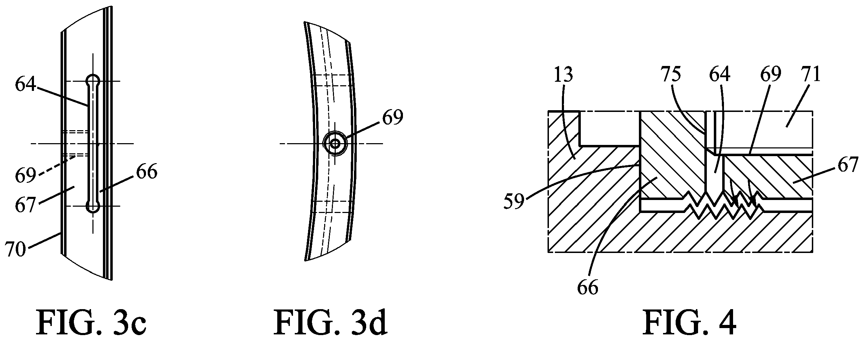

Comme visible sur la figure 3a, et plus en détail sur la figure 3c, le système 62 s'opposant au dévissage comprend une fente 64 radiale s'étendant depuis la surface périphérique 63 d'assemblage du corps de rétention 58. Cette fente 64 ne s'étend pas nécessairement sur la totale épaisseur du corps de rétention 58 (c'est-à-dire qu'elle peut ou non déboucher sur la surface intérieure 65 (opposée à la surface extérieure 63) du corps de rétention 58). Cette fente 64 sépare ainsi une portion proximale 66 du corps de rétention d'une portion distale 67 du corps de rétention. On observera que la longueur de la portion distale selon l'axe (B) peut être supérieure à la longueur de la portion proximale dans l'exemple décrit.

Le système 62 s'opposant au dévissage comprend en outre un système de sollicitation 68 sollicitant la portion proximale 66 et la portion distale 67 à l'opposé l'une de l'autre en tendant à ouvrir ladite fente 64.

Ce système de sollicitation 68 tend ainsi à presser les filets de la portion distale 67 du corps de rétention 58 contre ceux de la bague 13, afin de limiter le risque de dévissage du corps de rétention 58. Les filets de la portion proximale 66 du corps de rétention 58 sont également pressés contre ceux de la bague 13, afin de limiter le risque de dévissage du corps de rétention 58.

A cette fin, selon un exemple, le système de sollicitation 68 comprend un alésage axial 69 ménagé dans la portion distale 67 du corps de rétention 58, s'étendant axialement depuis la surface distale 70 du corps de rétention 58, et débouchant dans la fente 64 radiale. Le système de sollicitation 68 comprend également une vis 71 vissable axialement dans l'alésage 69 jusqu'à prendre appui, par son extrémité proximale 75, notamment plane, sur la portion proximale 66 du corps de rétention 58, celle-ci étant elle-même en appui sur la surface de butée axiale 59 de la bague extérieure 13.

Selon un exemple de réalisation, afin de limiter encore le risque de dévissage, le système 62 s'opposant au dévissage comprend une pluralité de fentes 64 réparties circonférentiellement, régulièrement ou irrégulièrement autour de l'axe (B) et une pluralité de systèmes de sollicitation 68, associés chacun à une fente 64 selon le mécanisme décrit ci-dessus. L'exemple pratique de réalisation des figures 3a-3d comprend deux tels couples fente/système de sollicitation répartis à 180° l'un de l'autre autour de l'axe (B). D'autres variantes sont possibles. La longueur de la fente 64 dans le sens circonférentiel peut être choisie en fonction.

Dans certains modes de réalisation, le corps de rétention 58 peut avoir une longueur axiale très faible, afin de limiter l'encombrement axial total du roulement.

Il peut toutefois être nécessaire de démonter le corps de rétention 58 de la bague du roulement, pour inspection, maintenance ou remplacement du système d'étanchéité.

A cette fin, on peut par exemple prévoir que le corps de rétention 58 comprend en outre un relief de montage/démontage 72.

Selon l'exemple particulier, le relief de montage/démontage comprend au moins une encoche 73 ménagée sur une surface de montage 74 du corps de rétention 58, et présentant une forme complémentaire d'un outil de montage/démontage (non représenté) du corps de rétention. Dans le cas présent, l'encoche peut être réalisée par exemple à la fois dans la surface distale 70 et la surface intérieure 65 du corps de rétention, avec une certaine longueur selon la direction périphérique.

Dans le cas présent, on peut réaliser plusieurs encoches 73 réparties, par exemple équi-réparties, sur la circonférence du corps de rétention. On peut par exemple réaliser six encoches 73. On peut décaler angulairement les emplacements des encoches 73 par rapport aux emplacements des fentes 64 pour éviter une superposition d'une encoche et d'une fente, qui pourrait affaiblir localement le corps de rétention 58.

L'outil de montage/démontage complémentaire du relief de montage/démontage, initialement désolidarisé du corps de rétention, peut être amené à être solidarisé au corps de rétention par insertion dans les encoches 73, permettant ainsi de dévisser le corps de rétention 58 depuis la position de rétention, jusqu'à désolidariser le corps de rétention 58 de la bague du roulement.

Dans l'hypothèse où le roulement comprend un système 62 s'opposant au dévissage du corps de rétention, celui-ci a de préférence été désactivé avant de démonter le corps de rétention 58.

Le montage du corps de rétention 58 eut se faire par une suite d'étape inverse de celle décrite ci-dessus pour le démontage.

Pour obtenir un roulement conforme à celui décrit ci-dessus, on peut procéder comme suit :
On fournit au moins une bague extérieure 13 présentant une surface intérieure 33 et une surface extérieure 34 opposée à la surface intérieure 33, la surface intérieure 33 de la bague extérieure 13 présentant un chemin de roulement extérieur 36, au moins une bague intérieure 12 présentant une surface intérieure 24 et une surface extérieure 25 opposée à la surface intérieure 24, la surface extérieure 25 de la bague intérieure présentant un chemin de roulement intérieur 28, un espace intérieur 43 étant défini entre la surface intérieure 33 de ladite au moins une bague extérieure 13 et la surface extérieure 25 de ladite au moins une bague intérieure 12, l'espace intérieur 43 s'étendant entre une extrémité proximale 44 où il est fermé par un système d'étanchéité proximal 45 entre au moins une bague extérieure 13 et au moins une bague intérieure 11 et une extrémité distale 46 où il est fermé par un système d'étanchéité distal 47 entre au moins une bague extérieure 13 et au moins une bague intérieure 12, et au moins une rangée de corps roulants 49 montés dans l'espace intérieur 43, roulants sur les premiers chemins de roulement extérieur et intérieur 36, 28, avec une partie d'un système de filetage/taraudage sur une surface périphérique de l'une des bagues intérieure et extérieure.

On fournit un corps de rétention 58 comprenant une partie d'un système de filetage/taraudage sur une surface périphérique d'assemblage 63 du corps de rétention 58.

On place les parties du système de filetage/taraudage en regard l'une de l'autre.

On visse le corps de rétention 58 jusque dans une position de rétention dans laquelle une surface de butée axiale 61 du corps de rétention 58 forme une butée axiale pour le système d'étanchéité distale 47 dans la direction longitudinale dans le sens proximal->distal.

Le cas échéant, ultérieurement, on applique un système 62 s'opposant au dévissage du corps de rétention.

## Revendications

1. Roulement d'un pied d'une pâle s'étendant selon une direction longitudinale (B) entre une extrémité proximale et une extrémité distale, le roulement autorisant une oscillation du pied autour d'un axe s'étendant selon la direction longitudinale par rapport à un boîtier,
Le roulement comprenant :
- Au moins une bague extérieure (13) présentant une surface intérieure (33) et une surface extérieure (34) opposée à la surface intérieure (33), la surface intérieure (33) de la bague extérieure (13) présentant au moins un chemin de roulement extérieur (35, 36),
- Au moins une bague intérieure (12) présentant une surface intérieure (24) et une surface extérieure (25) opposée à la surface intérieure (24), la surface extérieure (25) de la première bague intérieure (12) présentant au moins un chemin de roulement intérieur (28, 23),
Un espace intérieur (43) étant défini entre la surface intérieure (33) de ladite au moins une bague extérieure (13) et la surface extérieure (25) de ladite au moins une bague intérieure (12), l'espace intérieur (43) s'étendant entre une extrémité proximale (44) où il est fermé par un système d'étanchéité proximal (45) entre au moins une bague extérieure (13) et au moins une bague intérieure (11) et une extrémité distale (46) où il est fermé par un système d'étanchéité distal (47) entre au moins une bague extérieure (13) et au moins une bague intérieure (12),
- Au moins une rangée de corps roulants (48, 49) montés dans l'espace intérieur, roulants sur les chemins de roulement extérieur et intérieur (35, 36, 28, 23),
- Un système de rétention (57) du système d'étanchéité distal (47), comprenant un corps de rétention (58), et un système de filetage/taraudage réalisé d'une part sur une surface périphérique d'assemblage du corps de rétention et d'autre part sur une surface périphérique de l'une des bagues intérieure et extérieure en regard de la surface périphérique d'assemblage du corps de rétention, le corps de rétention (58) étant vissable jusque dans une position de rétention dans laquelle une surface de butée axiale (61) du corps de rétention forme une butée axiale pour le système d'étanchéité distal (47) dans la direction longitudinale (B) dans le sens proximal->distal.

2. Roulement d'un pied d'une pâle selon la revendication 1, dans lequel le système de rétention comprend en outre un système (62) s'opposant au dévissage du corps de rétention.

3. Roulement d'un pied d'une pâle selon la revendication 2, dans lequel le système (62) s'opposant au dévissage comprend une fente radiale (64) s'étendant depuis la surface (63) périphérique d'assemblage du corps de rétention séparant une portion proximale (66) d'une portion distale (67) du corps de rétention, et un système de sollicitation (68) sollicitant la portion proximale (66) et la portion distale (67) à l'opposé l'une de l'autre en tendant à ouvrir ladite fente (64).

4. Roulement d'un pied d'une pâle selon la revendication 3, dans lequel le système de sollicitation comprend un alésage (69) axial ménagé dans la portion distale (67) du corps de rétention (58), et débouchant dans la fente (64) radiale, et une vis (71), avec une partie (75) servant d'appui, vissable axialement dans l'alésage jusqu'à prendre appui sur la portion proximale du corps de rétention (58).

5. Roulement d'un pied d'une pâle selon les revendications 3 ou 4, dans lequel le système (62) s'opposant au dévissage comprend une pluralité de fentes (64) réparties circonférentiellement autour de l'axe et une pluralité de systèmes de sollicitation (68), associés chacun à une fente (64).

6. Roulement d'un pied d'une pâle selon l'une des revendications 1 à 5, dans lequel le corps de rétention (58) comprend en outre un relief de montage/démontage (72).

7. Roulement d'un pied d'une pâle selon la revendication 6, dans lequel le relief de montage/démontage (72) comprend au moins une encoche (73) ménagée sur une surface de montage du corps de rétention (58), et présentant une forme complémentaire d'un outil de montage/démontage du corps de rétention.

8. Système comprenant un roulement (7) d'un pied d'une pâle selon la revendication 6 ou 7, et un outil de montage/démontage complémentaire du relief de montage/démontage, solidarisable et désolidarisable du corps de rétention (58), adapté pour visser le corps de rétention (58) jusque dans la position de rétention.

9. Système oscillant comprenant un roulement (7) selon l'une quelconque des revendications 1 à 7, un boîtier (5) assemblé à l'épaulement (39) d'assemblage à un boîtier de la surface extérieure (34) de la bague extérieure (13) unique, une pâle (4) comprenant un pied de pâle (4a) assemblé à l'épaulement (20) d'assemblage à un pied de pâle de la surface intérieure (14) de la première bague intérieure (11), la pâle (4) étant montée oscillante autour dudit axe (B) s'étendant selon la direction longitudinale par rapport au boîtier (5) par l'intermédiaire du roulement (7).

10. Système tournant autour d'un axe de rotation, le système comprenant au moins un système oscillant selon la revendication 9 s'étendant radialement par rapport à l'axe de rotation (A), le roulement (7) étant distant de l'axe de rotation (A).

11. Procédé de fabrication d'un roulement d'un pied d'une pâle dans lequel :
- - on fournit au moins une bague extérieure (13) présentant une surface intérieure (33) et une surface extérieure (34) opposée à la surface intérieure (33), la surface intérieure (33) de la bague extérieure (13) présentant au moins un chemin de roulement extérieur (35, 36), au moins une bague intérieure (12) présentant une surface intérieure (24) et une surface extérieure (25) opposée à la surface intérieure (24), la surface extérieure (25) de la bague intérieure (12) présentant au moins un chemin de roulement intérieur (28, 23), un espace intérieur (43) étant défini entre la surface intérieure (33) de ladite au moins une bague extérieure (13) et la surface extérieure (25) de ladite au moins une bague intérieure (12), l'espace intérieur (43) s'étendant entre une extrémité proximale (44) où il est fermé par un système d'étanchéité proximal (45) entre au moins une bague extérieure (13) et au moins une bague intérieure (11) et une extrémité distale (46) où il est fermé par un système d'étanchéité distal (47) entre au moins une bague extérieure (13) et au moins une bague intérieure (12), et au moins une rangée de corps roulants (48, 49) montés dans l'espace intérieur (43), roulants sur les premiers chemins de roulement extérieur et intérieur (25, 36, 28, 23), avec une partie d'un système de filetage/taraudage sur une surface périphérique de l'une des bagues intérieure et extérieure,
- On fournit un corps de rétention (58) comprenant une partie d'un système de filetage/taraudage sur une surface (63) périphérique d'assemblage du corps de rétention (58),
- On place les parties du système de filetage/taraudage en regard l'une de l'autre,
- On visse le corps de rétention (58) jusque dans une position de rétention dans laquelle une surface de butée axiale (61) du corps de rétention (58) forme une butée axiale pour le système d'étanchéité distal (47) dans la direction longitudinale (B) dans le sens proximal->distal.

12. Procédé de fabrication selon la revendication 11, dans lequel, ultérieurement, on applique un système (62) s'opposant au dévissage du corps de rétention.

## Patentansprüche

1. Lager eines Schaufelfußes, der sich in einer Längsrichtung (B) zwischen einem proximalen Ende und einem distalen Ende erstreckt, wobei das Lager das Schwingen des Fußes um eine Achse, die in der Längsrichtung verläuft, bezüglich eines Gehäuses gestattet,
wobei das Lager Folgendes umfasst:
- mindestens einen Außenring (13), der eine Innenfläche (33) und eine Außenfläche (34) gegenüber der Innenfläche (33) aufweist, wobei die Innenfläche (33) des Außenrings (13) mindestens eine Außenlagerlaufbahn (35, 36) aufweist,
- mindestens einen Innenring (12), der eine Innenfläche (24) und eine Außenfläche (25) gegenüber der Innenfläche (24) aufweist, wobei die Außenfläche (25) des ersten Innenrings (12) mindestens eine Innenlagerlaufbahn (28, 23) aufweist,
wobei ein Innenraum (43) zwischen der Innenfläche (33) des mindestens einen Außenring (13) und der Außenfläche (25) des mindestens einen Innenrings (12) definiert wird, wobei sich der Innenraum (43) zwischen einem proximalen Ende (44), an dem er durch ein proximales Dichtungssystem (45) zwischen mindestens einem Außenring (13) in mindestens einem Innenring (11) verschlossen wird, und einem distalen Ende (46), an dem er durch ein distales Dichtungssystem (47) zwischen mindestens einem Außenring (13) und mindestens einem Innenring (12) verschlossen wird, erstreckt,
- mindestens eine Reihe von Rollkörpern (48, 49), die in dem Innenraum befestigt sind und in den Außen- und Innenlagerlaufbahnen (35, 36, 28, 23) rollen,
- ein Haltesystem (57) des distalen Dichtungssystems (47), das einen Haltekörper (58) umfasst, und ein Außengewinde-/Innengewindesystem, das einerseits auf einer Anbauumfangsfläche des Haltekörpers und andererseits auf einer Umfangsfläche des Innen- oder des Außenrings gegenüber der Anbauumfangsfläche des Haltekörpers ausgebildet ist, wobei der Haltekörper (58) bis zu einer Halteposition, an der eine axiale Anschlagfläche (61) des Haltekörpers einen axialen Anschlag für das distale Dichtungssystem (47) in der Längsrichtung (B) in der Richtung von proximal zu distalen bildet, schraubbar ist.

2. Lager eines Schaufelfußes nach Anspruch 1, wobei das Haltesystem des Weiteren ein System (62) zum Entgegenwirken eines Abschraubens des Haltekörpers umfasst.

3. Lager eines Schaufelfußes nach Anspruch 2, wobei das System (62) zum Entgegenwirken eines Abschraubens einen radialen Schlitz (64), der sich von der Anbauumfangsfläche (63) des Haltekörpers erstreckt und einen proximalen Abschnitt (66) von einem distalen Abschnitt (67) des Haltekörpers trennt, und ein Beaufschlagungssystem (68), das den proximalen Abschnitt (66) und den distalen Abschnitt (67), die einander gegenüber liegen, dahingehend beaufschlagt, den Schlitz (64) zu öffnen, umfasst.

4. Lager eines Schaufelfußes nach Anspruch 3, wobei das Beaufschlagungssystem eine axiale Bohrung (69), die in dem distalen Abschnitt (67) des Haltekörpers (58) ausgebildet ist und in den radialen Schlitz (64) führt, und eine Schraube (71) mit einem Teil (75), der als Anlage dient, die axial in die Bohrung Schraubbar ist, bis sie an dem proximalen Abschnitt des Haltekörpers (58) in Anlage gelangt, umfasst.

5. Lager eines Schaufelfußes nach Anspruch 3 oder 4, wobei das System (62) zum Entgegenwirken eines Abschraubens mehrere Schlitze (64), die umfangsmäßig um die Achse herum verteilt sind, und mehrere Beaufschlagungssysteme (68) die jeweils einem Schlitz (64) zugeordnet sind, umfasst.

6. Lager eines Schaufelfußes nach einem der Ansprüche 1-5, wobei der Haltekörper (58) des Weiteren ein Anbau-/Abbaurelief (72) umfasst.

7. Lager eines Schaufelfußes nach Anspruch 6, wobei das Anbau-/Abbaurelief (72) mindestens eine Aussparung (73) umfasst, die in der Anbaufläche des Haltekörpers (58) ausgebildet ist und eine Form aufweist, die zu einem Werkzeug zum Anbau/Abbau des Haltekörpers komplementär ist.

8. System, das ein Lager (7) eines Schaufelfußes nach Anspruch 6 oder 7 und ein Werkzeug zum Anbau/Abbau, das zu dem Anbau-/Abbaurelief komplementär ist, an dem Haltekörper (58) befestigbar und davon trennbar ist, zum Schrauben des Haltekörpers (58) bis in die Halteposition ausgeführt ist, umfasst.

9. Schwingungssystem, das ein Lager (7) nach einem der Ansprüche 1-7, ein Gehäuse (5), das mit der Schulter (39) zum Zusammenfügen mit einem Gehäuse der Außenfläche (34) des einzigen Außenrings (13) zusammengefügt ist, eine Schaufel (4), die einen Schaufelfuß (4a), der mit der Schulter (20) zum Zusammenfügen mit einem Schaufelfuß der Innenfläche (14) des ersten Innenrings (11) zusammengefügt ist, umfasst, umfasst, wobei die Schaufel (4) um die Achse (B), die in der Längsrichtung verläuft, herum bezüglich des Gehäuses (5) durch das Lager (7) schwingfähig befestigt ist.

10. System, das sich um die Drehachse dreht, wobei das System mindestens ein Schwingungssystem nach Anspruch 9, das sich radial bezüglich der Drehachse (A) erstreckt, umfasst, wobei das Lager (7) von der Drehachse (A) entfernt ist.

11. Verfahren zur Herstellung eines Lagers eines Schaufelfußes, bei dem:
- mindestens ein Außenring (13), der eine Innenfläche (33) und eine Außenfläche (34) gegenüber der Innenfläche (33) aufweist, wobei die Innenfläche (33) des Außenrings (13) mindestens eine Außenlagerlaufbahn (35, 36) aufweist, mindestens ein Innenring (12), der eine Innenfläche (24) und eine Außenfläche (25) gegenüber der Innenfläche (24) aufweist, wobei die Außenfläche (25) des Innenrings (12) mindestens eine Innenlagerlaufbahn (28, 23) aufweist, ein Innenraum (43), der zwischen der Innenfläche (33) des mindestens einen Außenrings (13) und der Außenfläche (25) des mindestens einen Innenrings (12) definiert wird, wobei sich der Innenraum (43) zwischen einem proximalen Ende (44), an dem er durch ein proximales Dichtungssystem (45) zwischen mindestens einem Außenring (13) und mindestens einem Innenring (11) verschlossen wird, und einem distalen Ende (46), an dem er durch ein distales Dichtungssystem (47) zwischen mindestens einem Außenring (13) und mindestens einem Innenring (12) verschlossen wird, erstreckt, und mindestens eine Reihe von Rollkörpern (48, 49), die in dem Innenraum (43) befestigt sind und in den ersten Außen- und Innenlagerlaufbahnen (25, 36, 28, 23) rollen, mit einem Teil eines Außengewinde-/Innengewindesystems auf einer Umfangsfläche des Innen- oder des Außenrings, bereitgestellt werden,
- ein Haltekörper (58), der einen Teil eines Außengewinde-/Innengewindesystems auf einer Anbauumfangsfläche (63) des Haltekörpers (58) umfasst, bereitgestellt wird,
- die Teile des Außengewinde-/Innengewindesystems einander gegenüber angeordnet werden,
- der Haltekörper (58) bis zu einer Halteposition, an der eine axiale Anschlagfläche (61) des Haltekörpers (58) einen axialen Anschlag für das distale Dichtungssystem (47) in der Längsrichtung (B) in der Richtung von proximal zu distal bildet, geschraubt wird.

12. Herstellungsverfahren nach Anspruch 11, wobei letztlich ein System (62) zum Entgegenwirken des Abschraubens des Haltekörpers angewendet wird.

## Claims

1. Rolling bearing for a blade root extending in a longitudinal direction (B) between a proximal end and a distal end, the rolling bearing allowing oscillation of the root about an axis extending in the longitudinal direction relative to a housing,
the rolling bearing comprising :
- at least one outer ring (13) having an inner surface (33) and an outer surface (34) opposite the inner surface (33), the inner surface (33) of the outer ring (13) having at least one outer race (35, 36),
- at least one inner ring (12) having an inner surface (24) and an outer surface (25) opposite the inner surface (24), the outer surface (25) of the first inner ring (12) having at least one inner race (28, 23),
an inner space (43) being defined between the inner surface (33) of said at least one outer ring (13) and the outer surface (25) of said at least one inner ring (12), the inner space (43) extending between a proximal end (44) where it is closed off by a proximal sealing system (45) between at least one outer ring (13) and at least one inner ring (11) and a distal end (46) where it is closed off by a distal sealing system (47) between at least one outer ring (13) and at least one inner ring (12),
- at least one row of rolling elements (48, 49) mounted in the inner space, rolling on the outer and inner races (35, 36, 28, 23),
- a retaining system (57) of the distal sealing system (47), comprising a retaining body (58), and a thread/tapping system formed on a peripheral assembly surface of the retaining body on the one hand and on a peripheral surface of one of the inner and outer rings facing the peripheral assembly surface of the retaining body on the other hand, the retaining body (58) being screwable into a retaining position in which an axial abutment surface (61) of the retaining body forms an axial stop for the distal sealing system (47) in the longitudinal direction (B) in the proximal->distal direction.

2. Rolling bearing for a blade root as claimed in claim 1, wherein the retaining system further comprises a system (62) preventing unscrewing of the retaining body.

3. Rolling bearing for a blade root as claimed in claim 2, wherein the unscrewing prevention system (62) comprises a radial slot (64) extending from the peripheral assembly surface (63) of the retaining body separating a proximal portion (66) from a distal portion (67) of the retaining body and a biasing system (68) urging the proximal portion (66) and the distal portion (67) away from one another in order to open said slot (64).

4. Rolling bearing for a blade root as claimed in claim 3, wherein the biasing system comprises an axial bore (69) formed in the distal portion (67) of the retaining body (58) and opening into the radial slot (64), and a screw (71) having a bearing portion (75) axially screwable into the bore until it bears against the proximal portion of the retaining body (58).

5. Rolling bearing for a blade root as claimed in claims 3 or 4, wherein the unscrewing prevention system (62) comprises a plurality of slots (64) distributed circumferentially around the axis and a plurality of biasing systems (68), each associated with a slot (64).

6. Rolling bearing for a blade root as claimed in one of claims 1 to 5, wherein the retaining body (58) further comprises an assembly/disassembly relief (72).

7. Rolling bearing for a blade root as claimed in claim 6, wherein the assembly/disassembly relief (72) comprises at least one notch (73) formed on a mounting surface of the retaining body (58) and having a shape complementary to a tool for assembling/disassembling the retaining body.

8. System comprising a rolling bearing (7) for a blade root as claimed in claim 6 or 7 and an assembly/disassembly tool complementary to the assembly/disassembly relief which can be secured to and detached from the retaining body (58), adapted for screwing the retaining body (58) into the retaining position.

9. Oscillating system comprising a rolling bearing (7) as claimed in any one of claims 1 to 7, a housing (5) assembled with a shoulder (39) for assembling with a housing of the outer surface (34) of the single outer ring (13), a blade (4) comprising a blade root (4a) assembled with a shoulder (20) for assembling with a blade root of the inner surface (14) of the first inner ring (11), the blade (4) being mounted so as to oscillate about said axis (B) extending in the longitudinal direction relative to the housing (5) by means of the rolling bearing (7).

10. System rotating about an axis of rotation, the system comprising at least one oscillating system as claimed in claim 9 extending radially relative to the axis of rotation (A), the rolling bearing (7) being spaced apart from the axis of rotation (A).

11. Method for manufacturing a rolling bearing for a blade root wherein:
- - there is provided at least one outer ring (13) having an inner surface (33) and an outer surface (34) opposite the inner surface (33), the inner surface (33) of the outer ring (13) having at least one outer race (35, 36), at least one inner ring (12) having an inner surface (24) and an outer surface (25) opposite the inner surface (24), the outer surface (25) of the inner ring (12) having at least one inner race (28, 23), an inner space (43) being defined between the inner surface (33) of said at least one outer ring (13) and the outer surface (25) of said at least one inner ring (12), the inner space (43) extending between a proximal end (44) where it is closed off by a proximal sealing system (45) between at least one outer ring (13) and at least one inner ring (11) and a distal end (46) where it is closed off by a distal sealing system (47) between at least one outer ring (13) and at least one inner ring (12), and at least one row of rolling elements (48, 49) mounted in the inner space (43) rolling on the first outer and inner races (25, 36, 28, 23), with a portion of a thread/tapping system on a peripheral surface of one of the inner and outer rings,
- a retaining body (58) is provided, comprising a portion of a thread/tapping system on a peripheral assembly surface (63) of the retaining body (58),
- the portions of the thread/tapping system are placed facing one another,
- the retaining body (58) is screwed into a retaining position in which an axial abutment surface (61) of the retaining body (58) forms an axial stop for the distal sealing system (47) in the longitudinal direction (B) in the proximal->distal direction.

12. Manufacturing method as claimed in claim 11, wherein a system (62) preventing unscrewing is subsequently applied to the retaining body.
